# DEMANDE DE BREVET EUROPEEN

(11) **EP 2 196 358 A1**
(43) Date de publication de la demande: **16.06.2010**
(21) Numéro de dépôt: 08171143.4
(22) Date de dépôt: 09.12.2008
(51) Int. Cl.: B60Q 3/02, B60Q 3/00

(54) **Dispositif d'éclairage intérieur utilisant des éléments optiques diffractifs**

(71) Demandeur: Delphi Technologies, Inc., Troy, Michigan 48007 (US)
(72) Inventeur: Ndao, Mandiaye, 67000 Strasbourg (FR); Tupinier, Laurent, 67116 Reichstett (FR)
(74) Mandataire: Robert, Vincent

(57) **Abrégé**

Dispositif d'éclairage intérieur (14) prévu pour être agencé dans l'habitacle d'un véhicule automobile, comportant au moins une source lumineuse (28) et au moins une pièce optique de diffusion (30) en vue de produire un faisceau lumineux d'éclairage intérieur (F1,F2,F3), caractérisé en ce que la pièce optique de diffusion (30) est une pièce transparente qui est pourvue d'une première couche (32) d'éléments optiques diffractifs (34) coopérant avec la source lumineuse pour produire un faisceau lumineux d'éclairage intérieur (F1,F2,F3) de forme déterminée.

## Description

### DOMAINE TECHNIQUE

La présente invention concerne un dispositif d'éclairage intérieur pour véhicule automobile.

### ARRIERE-PLAN TECHNOLOGIQUE DE L'INVENTION

La présente invention concerne plus particulièrement un dispositif d'éclairage intérieur agencé dans l'habitacle d'un véhicule automobile, par exemple sur le toit, notamment dans un boîtier appelé module de toit.

Les dispositifs d'éclairage intérieur actuels sont généralement réalisés à partir d'un assemblage optique classique comportant une ampoule, un réflecteur, et une lentille. Cependant, ces dispositifs d'éclairage ne peuvent remplir que des fonctions relativement simples ou nécessitent des systèmes complexes et coûteux pour parvenir à remplir des fonctions plus compliquées.

D'autres solutions d'éclairage intérieur utilisant des faisceaux de fibre optique ou des séries de diodes électroluminescentes intégrées dans le toit du véhicule ont aussi été proposées mais elles impliquent aussi des coûts importants et des opérations de montage complexes.

De plus, le marché automobile réclame l'intégration de fonctions nombreuses et variées dans le toit du véhicule, ce qui nécessite des solutions compactes et économiques.

### RESUME DE L'INVENTION

La présente invention vise à proposer un dispositif d'éclairage intérieur simple et économique pour réaliser une large gamme de fonctions d'éclairage tenant compte des contraintes mentionnées plus haut.

Dans ce but, la présente invention propose un dispositif d'éclairage intérieur tel que décrit dans les revendications attachées, en particulier un dispositif d'éclairage intérieur comportant au moins une source lumineuse et au moins une pièce optique de diffusion en vue de produire un faisceau lumineux d'éclairage intérieur, **caractérisé en ce que** la pièce optique de diffusion est une pièce transparente qui est pourvue d'une première couche d'éléments optiques diffractifs coopérant avec la source lumineuse pour produire un faisceau lumineux d'éclairage intérieur de forme déterminée.

L'invention propose d'utiliser une pièce optique utilisant des éléments diffractifs micro ou nano structurés capables de fournir une grande variété de fonctions telles que :
- mise en forme du faisceau lumineux,
- homogénéisation du faisceau lumineux,
- répartition du faisceau lumineux,
- orientation du faisceau lumineux notamment pour remplir une fonction de liseuse.

La pièce optique est de préférence plane et agit comme un générateur de fronts d'onde lumineuse. Le phénomène physique utilisé pour mettre en forme la lumière est basé sur la diffraction et sur la diffusion de la lumière.

Les fonctions complexes sont obtenues par des méthodes de conception assistées par ordinateur et implémentées sur les surfaces planes de la pièce optique par microstructuration ou nanostructuration. Ainsi, la pièce optique peut être réalisée industriellement par des techniques de reproduction telles que l'embossage ou le moulage par injection à partir d'une matrice.

### BREVE DESCRIPTION DES DESSINS

D'autres caractéristiques, buts et avantages de l'invention apparaîtront à la lecture de la description détaillée qui va suivre, et en regard des dessins annexés, donnés à titre d'exemple non limitatif et sur lesquels:
- la figure 1 est vue en perspective qui représente schématiquement l'habitacle d'un véhicule automobile équipé d'un dispositif d'éclairage intérieur conforme aux enseignements de l'invention ;
- la figure 2 est une vue en coupe transversale qui représente schématiquement l'habitacle de la figure 1 ;
- la figure 3 est une vue de dessous qui représente schématiquement le dispositif d'éclairage intérieur de la figure 1 ;
- la figure 4 est une vue de dessus qui représente schématiquement une unité d'éclairage appartenant au dispositif d'éclairage de la figure 1 ;
- la figure 5 est une similaire à celle de la figure 4 qui représente une variante de réalisation de l'unité d'éclairage du dispositif d'éclairage selon l'invention.

### DESCRIPTION DES MODES DE REALISATION PREFERES

Dans la suite de la description, des éléments identiques ou similaires seront désignés par les mêmes références.

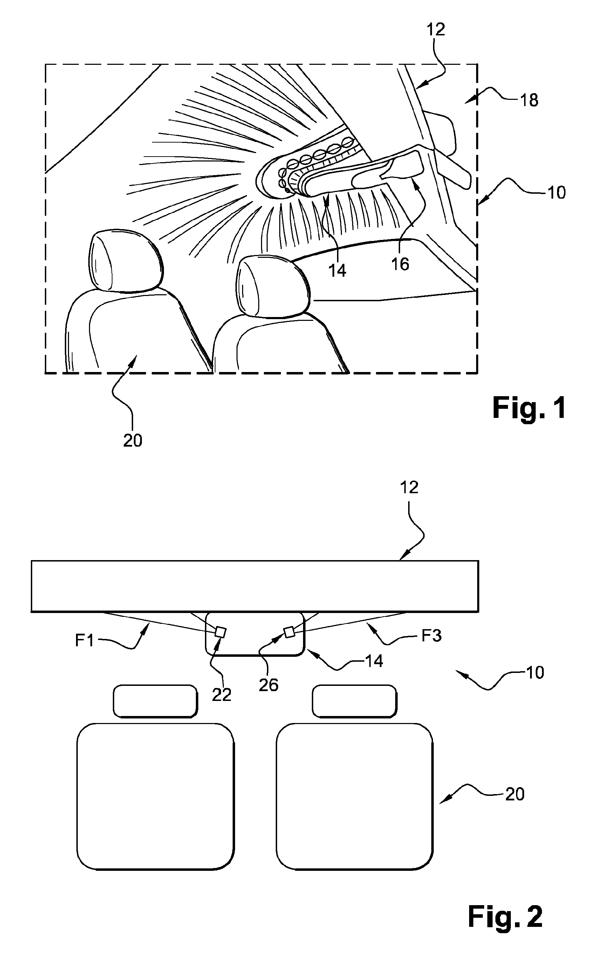

Sur les figures 1 et 2 on a représenté schématiquement l'habitacle 10 d'un véhicule automobile délimité vers le haut par une portion de toit 12, ou pavillon, sur laquelle est agencé un dispositif d'éclairage intérieur 14 conforme aux enseignements de l'invention.

Le dispositif d'éclairage intérieur 14 est ici agencé dans un boîtier formant module de toit 16 en vue de remplir notamment une fonction d'éclairage indirect de l'habitacle 10 du véhicule. Le module de toit 16 est ici agencé à proximité du pare-brise 18, au-dessus des sièges avant 20 du véhicule.

Selon le mode de réalisation représenté sur les figures 1 à 4, le dispositif d'éclairage intérieur 14 comporte trois unités d'éclairage 22, 24, 26 qui comprennent chacune une source lumineuse 28 et une pièce optique de diffusion 30 de manière que chaque unité d'éclairage 22, 24, 26 puisse produire un faisceau lumineux d'éclairage intérieur F1, F2, F3 associé. Les trois faisceaux lumineux F1, F2, F3 sont ici orientés suivant des directions globalement orthogonales les une par rapport aux autres. Les unités d'éclairage 22, 24, 26 sont agencées sur les bords du boîtier formant le module de toit 16. Une unité d'éclairage arrière 24 éclaire ici vers l'arrière du toit 12 du véhicule.

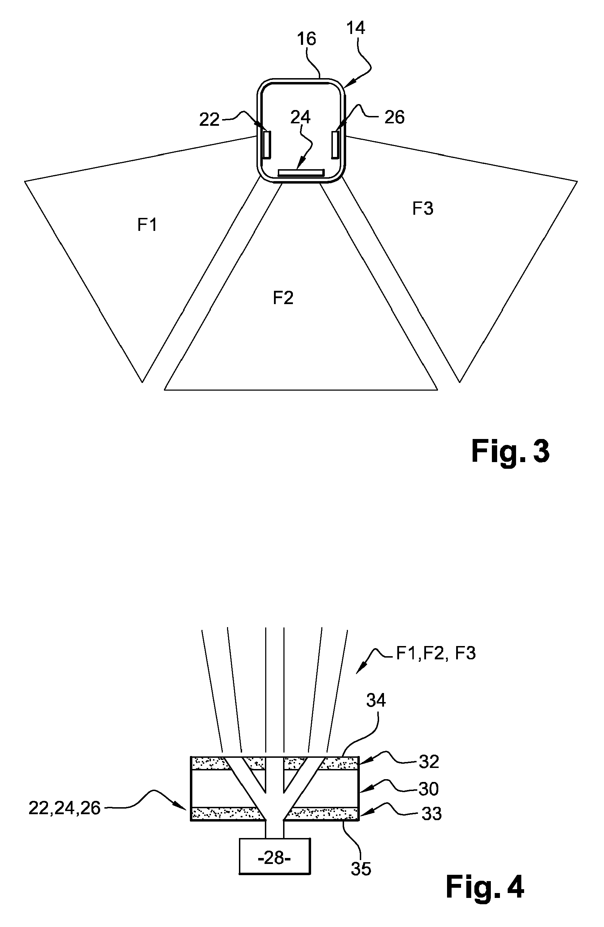

Conformément aux enseignements de l'invention, et comme représenté sur la figure 4, la pièce optique de diffusion 30 est une pièce transparente qui est pourvue d'une première couche 32 d'éléments optiques diffractifs 34 en surface coopérant avec la source lumineuse 28 pour produire un faisceau lumineux d'éclairage intérieur F1, F2, F3 de forme déterminée. Chaque faisceau d'éclairage F1, F2, F3 est dirigé ici vers le toit 12 de manière à produire un éclairage indirect de l'habitacle 10.

La pièce optique de diffusion 30 comporte une surface externe qui est opposée à la source lumineuse 28 et qui est munie de la première couche 32 d'éléments optiques diffractifs 34 dits éléments de mise en forme qui visent à donner au faisceau lumineux F1, F2, F3 sa forme.

La pièce optique de diffusion 30 comporte une surface interne qui est située en vis-à-vis de la source lumineuse 28 et qui est munie d'une seconde couche 33 d'éléments optiques diffractifs 35 dits éléments de répartition qui visent à répartir la lumière sur la première couche avant que le faisceau lumineux soit mis en forme. Sur l'exemple représenté figure 4, la seconde couche 33 divise le faisceau lumineux originel émis par la source lumineuse 28 en trois portions de faisceaux qui sont ensuite mise en forme par la première couche 32.

Avantageusement, la pièce optique de diffusion 30 est constituée par une plaque en matière plastique formant un substrat et les éléments optiques diffractifs 34, 35 sont réalisés par injection ou embossage.

La pièce optique de diffusion 30 fonctionne comme un processeur de front d'onde. Ainsi, la structure et la disposition des éléments optiques diffractifs peut être réalisée sous la forme d'un hologramme calculé par ordinateur de sorte que le faisceau lumineux projette une image qui peut être une forme simple tel qu'un rond ou un carré mais qui peut aussi revêtir des formes plus complexes permettant d'obtenir un éclairage d'ambiance avec des formes esthétiques affichées sur le toit du véhicule.

La pièce optique de diffusion 30 est réalisée à partir d'une matrice elle-même obtenue soit par microlithographie classique à masque (comme pour la fabrication des circuits intégrés en microélectronique) soit par nano-lithographie par interférence laser. Dans ce dernier cas, la matrice est enregistrée en utilisant une plaque photosensible et des rayons lumineux visant à créer des interférences sur la plaque photosensible. La plaque photosensible utilisée pour l'enregistrement de la matrice est composée d'un dépôt de résine photosensible en couche uniforme sur une plaque transparente (quartz, silicium, verre...), la plaque transparente sert de support mécanique uniquement. Les interférences permettent d'insoler des zones précises de la couche photosensible ce qui modifie la solubilité de la résine dans ces zones. Les zones exposées de la résine photosensible deviennent ainsi plus ou moins solubles que les autres zones. Une gravure chimique permet la suppression des zones non insolées (ou insolée selon le type de la résine photosensible : négative ou positive) de manière à obtenir une structure diffractive de surface.

Selon une variante de réalisation (non représentée), on peut prévoir une unité d'éclairage supplémentaire qui produit un faisceau d'éclairage orienté vers un passager du véhicule de manière à remplir une fonction de liseuse.

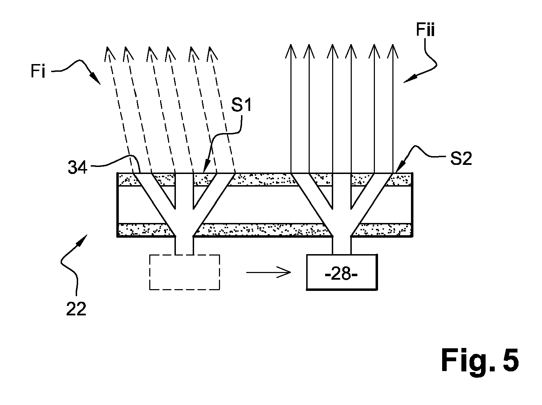

Sur la figure 5, on a représenté une variante de réalisation dans laquelle la pièce optique de diffusion 30 comporte deux séries S1, S2 d'éléments optiques diffractifs de mise en forme 34 produisant respectivement un premier Fi et un second Fii faisceaux lumineux de formes distinctes. L'unité d'éclairage 22 du dispositif d'éclairage intérieur 14 comporte des moyens commandés pour permettre le déplacement relatif de la pièce optique de diffusion 30 par rapport à la source lumineuse 28 de manière que dans une première position relative l'unité d'éclairage 22 produise le premier faisceau lumineux Fi, représentée en trait discontinu sur la figure 5, et dans une seconde position relative l'unité d'éclairage 22 produise le second faisceau lumineux Fii, représenté en trait continu sur la figure 5. Selon l'exemple représenté, c'est la source lumineuse 28 qui se déplace le long de la pièce optique de diffusion 30. Bien entendu, l'inverse serait également envisageable.

D'autres variantes de réalisation de l'invention peuvent être envisagées.

## Revendications

1. Dispositif d'éclairage intérieur prévu pour être agencé dans l'habitacle d'un véhicule automobile, comportant au moins une source lumineuse et au moins une pièce optique de diffusion en vue de produire un faisceau lumineux d'éclairage intérieur, **caractérisé en ce que** la pièce optique de diffusion est une pièce transparente qui est pourvue d'une première couche d'éléments optiques diffractifs coopérant avec la source lumineuse pour produire un faisceau lumineux d'éclairage intérieur de forme déterminée.

2. Dispositif selon la revendication précédente, **caractérisé en ce que** la pièce optique de diffusion comporte une surface externe qui est opposée à la source lumineuse et qui est munie de la première couche d'éléments optiques diffractifs dits éléments de mise en forme, et comporte une surface interne qui est située en vis-à-vis de la source lumineuse et qui est munie d'une seconde couche d'éléments optiques diffractifs dits éléments de répartition.

3. Dispositif selon l'une quelconque des revendications précédentes, **caractérisé en ce que** la pièce optique de diffusion est constituée par une plaque en matière plastique.

4. Dispositif selon la revendication précédente, **caractérisé en ce que** la pièce optique de diffusion et les éléments optiques diffractifs sont réalisés par injection ou embossage.

5. Dispositif selon l'une quelconque des revendications précédentes, **caractérisé en ce que** la pièce optique de diffusion comporte au moins deux séries d'éléments optiques diffractifs de mise en forme produisant respectivement un premier et un second faisceaux lumineux de formes distinctes, et **en ce que** le dispositif comporte des moyens commandés pour permettre le déplacement relatif de la pièce optique de diffusion par rapport à la source lumineuse de manière que dans une première position relative le dispositif produise le premier faisceau lumineux et dans une seconde position relative le dispositif produise le second faisceau lumineux.

6. Module de toit pour véhicule automobile **caractérisé en ce qu'**il comporte un dispositif d'éclairage selon l'une quelconque des revendications précédentes.

7. Véhicule automobile comportant un habitacle délimité vers le haut par une portion de toit sur laquelle est agencé un dispositif d'éclairage intérieur, **caractérisé en ce que** le dispositif d'éclairage intérieur est réalisé selon l'une quelconque des revendications 1 à 5.

8. Véhicule selon la revendication précédente, **caractérisé en ce que** la portion de toit comporte un boîtier formant module de toit et **en ce que** le dispositif d'éclairage intérieur est agencé sur le module de toit.

9. Véhicule selon la revendication 7 ou 8, **caractérisé en ce que** le faisceau d'éclairage produit par le dispositif d'éclairage intérieur est dirigé vers le toit de manière à produire un éclairage indirect de l'habitacle.

10. Véhicule selon la revendication 7 ou 8, **caractérisé en ce que** le faisceau d'éclairage est orienté vers un passager du véhicule de manière à remplir la fonction de liseuse.
